# EUROPÄISCHE PATENTANMELDUNG

(11) **EP 1 703 193 A1**
(43) Veröffentlichungstag der Anmeldung: **20.09.2006**
(21) Anmeldenummer: 06004557.2
(22) Anmeldetag: 07.03.2006
(51) Int. Cl.: F16L 37/113, F16L 37/098

(54) **Fittingkörper und System bestehend aus einem Fittingkörper und einer Rohrleitungskupplung**

(30) Priorität: 17.03.2005 DE 202005004523 U
(71) Anmelder: TECE GmbH & Co. KG, 48282 Emsdetten (DE)
(72) Erfinder: Fehlings, Thomas, 48282 Emsdetten (DE)
(74) Vertreter: Stachow, Ernst-Walther

(57) **Zusammenfassung**

Bei einem Fittingkörper (1) mit mindestens einem rohrförmigen freien Ende (2) zum Anschluss an Rohrleitungen (9) wobei das freie Ende (2) mindestens eine Rastvertiefung (7) zum Einrasten eines Rastvorsprungs (17) einer mit dem freien Ende (2) des Fittingkörpers (1) zusammenwirkenden Rohrleitungskupplung (8) aufweist, ist zum einfachen Lösen der Rastverbindung vorgesehen, dass die Rastvertiefung (7) mindestens an einer ihrer Seiten eine Auflauffläche (6) für den Rastvorsprung (17) aufweist und die Auflauffläche (6) so ausgebildet ist, dass bei Relativbewegung des Rastvorsprungs (17) der Rohrleitungskupplung (8) gegen die Auflauffläche (6) der Rastvertiefung (7) des Fittingkörpers (1) ein Bewegungswiderstand zu überwinden ist.

## Beschreibung

Die Erfindung betrifft einen Fittingkörper mit mindestens einem rohrförmigen freien Ende zum Anschluss an Rohrleitungen, wobei das freie Ende mindestens eine Rastvertiefung zum Einrasten eines Rastvorsprungs einer mit dem freien Ende des Fittingkörpers zusammenwirkenden Rohrleitungskupplung aufweist. Weiterhin betrifft die Erfindung ein System bestehend aus einem solchen Fittingkörper und einer Rohrleitungskupplung.

Wie in der Zeichnung nicht näher dargestellt ist, sind die Auflaufflächen 6 der Vorsprünge 5 so ausgebildet, dass bei Relativbewegung der Rastvorsprünge gegen die Auflaufflächen 6 der Rastvertiefungen 7 ein Bewegungswiderstand zu überwinden ist. Das heißt, dass der Bewegungswiderstand durch eine vorbestimmte Kraft (Drehmoment) auf den Fittingkörper 1 bzw. die Rohrleitungskupplung zu überwinden ist, ehe die Rastvorsprünge über die Auflaufflächen 6 hinweg bewegt und über die Vorsprünge 5 durch axiale Verschiebung vom freien Ende 2 des Fittingkörpers 1 weg vom Fittingkörper 1 gelöst werden können. Der Bewegungswiderstand kann z.B. durch Bereiche größerer Steigung oder durch Vorsprünge der Auflaufflächen 6 bewirkt werden.

Derartige Fittingkörper und Systeme werden insbesondere in der Haustechnik zum einfachen und schnellen Anschluss für Warm- und Kaltwasserleitungen für den Sanitär- und Heizungsbereich oder auch zum Anschluss von Druckluftleitungen und dergleichen eingesetzt. Sie können modular aufgebaut sein, z.B. als T-Fittingkörper. Als solche eigenen sie sich beispielsweise als Fußbodenheizungsverteiler.

Ein Fittingkörper der eingangs genannten Art sowie ein System bestehend aus einem solchen Fittingkörper und einer Rohrleitungskupplung sind z.B. aus der DE 102 12 735 A bekannt. Wird ein freies Ende des in dieser Druckschrift offenbarten Fittingkörpers in die Rohrleitungskupplung eingerastet, lässt es sich aus dieser nicht ohne weiteres wieder entfernen. Zum Lösen der Rastverbindung muss das aus zwei halbschalenförmigen Hälften zusammengesetzte Kupplungsteil der Rohrleitungskupplung, das durch Aufschrauben einer Fixierhülse zusammengehalten wird, demontiert werden. Ist die Rohrleitungskupplung darüber hinaus mit einer z.B. darin eingesteckten Rohrleitung verbunden, wird bei der Demontage unter Umständen auch die Rohrleitung gelöst.

Der vorliegenden Erfindung liegt die Aufgabe zugrunde, einen Fittingkörper sowie ein System bestehend aus einem Fittingkörper und einer Rohrleitungskupplung bereitzustellen, wobei der Fittingkörper so ausgelegt ist, dass er aus der Rastverbindung mit dem Kupplungsteil wieder lösbar ist.

Die Aufgabe wird erfindungsgemäß dadurch gelöst, dass bei dem eingangs genannten Fittingkörper die Rastvertiefung mindestens an einer ihrer Seiten eine Auflauffläche für den Rastvorsprung aufweist und die Auflauffläche so ausgebildet ist, dass bei Relativbewegung des Rastvorsprungs der Rohrleitungskupplung gegen die Auflauffläche der Rastvertiefung des Fittingkörpers ein Bewegungswiderstand zu überwinden ist.

Aufgrund der Auflauffläche der Rastvertiefung lässt sich durch Relativbewegung des Rastvorsprungs der Rohrleitungskupplung gegen die Auflauffläche der Rastvertiefung des Fittingkörpers der Rastvorsprung aus der Rastvertiefung entfernen, wodurch die Rastverbindung zwischen Fittingkörper und Rohrleitungskupplung auf einfache und schnelle Weise gelöst werden kann.

Die Auflauffläche ist dabei so ausgebildet sein, dass bei Relativbewegung des Rastvorsprungs gegen die Auflauffläche der Rastvertiefung ein Bewegungswiderstand zu überwinden ist. Zum Beispiel kann die Auflauffläche Steigungsunterschiede, wie zunächst eine größere Steigung, oder Vorsprünge aufweisen, die den Widerstand bewirken. Der Widerstand sollte manuell oder durch ein einfaches Werkzeug überwindbar sein. Er sollte derart sein, dass sich die Rastverbindung zwischen Fittingkörper und Rohrleitungskupplung nicht bei normalen auf installierte Rohrleitungssysteme einwirkenden Kräften lösen kann.

Die Auflauffläche für den Rastvorsprung kann an einer in Umfangsrichtung weisenden Seite der Rastvertiefung vorgesehen sein, so dass sich durch Relativdrehung des Fittingkörpers gegenüber der Rohrleitungskupplung die Rastverbindung zwischen Fittingkörper und Rohrleitungskupplung lösen lässt.

Die Auflauffläche kann auch an einer axial von der Stirnseite des freien Endes des Fittingkörpers weg weisenden Seite der Rastvertiefung angeordnet sein. Durch Relativdrehung der Rohrleitungskupplung gegenüber dem Fittingkörper lässt sich der Rastvorsprung aus seiner Rastposition in der Rastvertiefung zu der Stelle der Rastvertiefung mit der axial gerichteten Auflauffläche bewegen. Durch anschließende axiale Relativbewegung der Rohrleitungskupplung vom Fittingkörper weg kann dann der Rastvorsprung aus der Rastvertiefung entfernt und die Rastverbindung zwischen Fittingkörper und Rohrleitungskupplung gelöst werden.

In einer bevorzugten Weiterbildung der Erfindung kann die Rastvertiefung mindestens an einer ihren Seiten in Umfangsrichtung des rohrförmigen freien Endes des Fittingkörpers einen radialen Vorsprung aufweisen, der eine in Umfangsrichtung weisende geneigte Auflauffläche aufweist.

Der radiale Vorsprung kann andererseits mit einer in axialer Richtung von der Stirnseite des freien Endes des Fittingkörpers weg weisenden Auflauffläche für den Rastvorsprung versehen sein. Bei dieser Ausbildung ist zunächst eine Relativbewegung des Kupplungsteils in axialer Richtung vom Fittingkörper weg durchzuführen, bis der Rastvorsprung seitlich über den radialen Vorsprung hinweg bewegt ist. Danach ist eine Relativdrehung vorzunehmen, bis der Rastvorsprung und der radiale Vorsprung linear zueinander ausgerichtet sind. Anschließend wird die Rohrleitungskupplung in axialer Richtung relativ zum Fittingkörper hin bewegt, wobei der Rastvorsprung über die Auflauffläche aus der Rastvertiefung entfernt und die Rohrleitungskupplung vom Fittingkörper gelöst wird.

In einer bevorzugten und wohlbekannten Ausführung des Fittingkörpers ist die Rastvertiefung an der Außenseite seines freien Endes angeordnet. Dazu kann der Fittingkörper an seinem freien Ende einem radial nach außen weisenden Ringflansch aufweisen, wobei die Rastvertiefung durch den vom Ringflansch an seiner axial vom freien Ende des Fittingkörpers weg weisenden Seite gebildeten Hinterschnitt gegeben ist.

Erfindungsgemäß können an der axial vom Ende des Fittingkörpers weg weisenden Seite des Ringflansches mehrere Vorsprünge ausgebildet sein, zwischen denen eine entsprechende Zahl von Rastvertiefungen angeordnet sind, die der Zahl der Rastvorsprünge der mit dem Fittingkörper zu verbindenden Rohrleitungskupplung entsprechen. Die Höhe der Vorsprünge kann etwa der Höhe des Ringflansches entsprechen.

In einer bevorzugten Weiterbildung weisen die Vorsprünge in Umfangsrichtung des rohrförmigen Endes des Fittingkörpers an beiden Seiten geneigte Auflaufflächen für die Rastvorsprünge der Rohrleitungskupplung auf. Damit ist vorgesehen, dass die Rastverbindung zwischen dem freien Ende des Fittingkörpers und der Rohrleitungskupplung durch eine Relativdrehung sowohl in der einen als auch in der anderen Umfangsrichtung gelöst werden kann.

Andererseits kann vorgesehen sein, dass die Auflaufflächen nur an einer Seite der Rastvorsprünge in gleicher Umfangsrichtung ausgebildet sind, wenn das aus Fittingkörper und Rohrleitungskupplung bestehende System dazu ausgelegt ist, dass sich die Rastverbindung nur durch Drehung in einer Richtung lösen lässt.

In einer anderen Weiterbildung weisen die Vorsprünge an ihren axial von der Stirnseite des freien Endes des Fittingkörpers weg weisenden Seiten geneigte Auflaufflächen auf.

Zweckmäßig sind insbesondere vier gleichmäßig über den Umfang des rohrförmigen Endes des Fittingkörpers verteilte Vorsprünge.

Die Erfindung besteht über den Fittingkörper hinaus in einem System aus Fittingkörper und Rohrleitungskupplung, wobei die Rohrleitungskupplung ein Kupplungsende zur rastenden Aufnahme des freien Endes des Fittingkörpers aufweist und am Kupplungsende mindestens ein Rastvorsprung vorgesehen ist, der rastend in die Rastvertiefung des freien Endes des Fittingkörpers eingreifbar ist, und wobei durch Relativbewegung zwischen der Rohrleitungskupplung und dem Fittingkörper der Rastvorsprung über die Auflauffläche des Vorsprungs seitlich der Rastvertiefung aus dieser entfernbar ist, so dass die Rohrleitungskupplung vom Fittingkörper lösbar ist.

Bei einer bevorzugten Weiterbildung dieses Systems ist das Kupplungsende der Rohrleitungskupplung im wesentlich zylinderförmig ausgebildet mit einer Stirnseite zum Einführen des freien Endes des Fittingkörpers und mindestens einem sich axial von der Stirnseite weg erstreckenden flexiblen Rastfinger mit einem radial nach innen gegenüber der Innenseite des Kupplungsendes vorstehenden Rastvorsprung zum rastenden Eingriff in eine an der Außenseite des freien Endes des Fittingkörpers angeordnete Rastvertiefung.

Erfindungsgemäß ist weiterhin ein System aus Fittingkörper und Rohrleitungskupplung vorgesehen, wobei der Fittingkörper mindestens ein rohrförmiges freies Ende mit mindestens einer Rastvertiefung zum Einrasten eines Rastvorsprungs der Rohrleitungskupplung aufweist und die Rastvertiefung mindestens an einer ihrer Seiten in Umfangsrichtung des rohrförmigen freien Endes einen radialen Vorsprung aufweist. Im Unterschied zu dem vorstehend beschriebenen Ausführungsbeispiel muss der radiale Vorsprung nicht mit einer Auflauffläche für den Rastvorsprung versehen sein. Vielmehr weist der Rastvorsprung an mindestens einer seiner in Umfangsrichtung weisenden Seiten eine gegenüber der Umfangsrichtung radial nach innen geneigte Auflauffläche auf, die bei Relativdrehung der Rohrleitungskupplung gegenüber dem Fittingkörper mit dem radialen Vorsprung des Fittingkörpers zusammenwirkt. Im übrigen kann das aus Fittingkörper und Rohrleitungskupplung bestehende System wie oben beschrieben ausgebildet sein.

Zweckmäßigerweise kann das Kupplungsende der Rohrleitungskupplung mindestens eine fensterartige Öffnung in der Zylinderwand aufweisen und der Rastfinger sich von der von der Stirnseite abgewandten Seitenfläche der Öffnung aus in dieser erstrecken.

In einer vorteilhaften Ausführung sind vier über den Umfang des Kupplungsendes gleichmäßig verteilte fensterartige Öffnungen mit darin sich erstreckenden Rastfingern vorgesehen.

Ein bevorzugtes Ausführungsbeispiel der Erfindung wird im Folgenden anhand der Zeichnung näher beschrieben. In der Zeichnung zeigen:
- Figur 1: eine perspektivische Darstellung eines rohrförmigen Fittingkörpers,
- Figur 2: einen hälftigen Querschnitt durch den in Figur 1 dargestellten Fittingkörper,
- Figur 3: einen Längsschnitt durch den in Figur 1 dargestellten Fittingkörper
- Figur 4: eine hälftig aufgeschnittene seitliche Darstellung eines Systems bestehend aus einem Fittingkörper und einer Rohrleitungskupplung mit darin eingesteckter Rohrleitung,
- Figur 5: eine perspektivische Darstellung des Kupplungsteils der in Figur 1 dargestellten Rohrleitungskupplung,
- Figur 6: einen Längsschnitt durch das in Figur 5 gezeigte Kupplungsteil und
- Figur 7: einen Querschnitt durch das in Figur 5 gezeigte Kupplungsteil

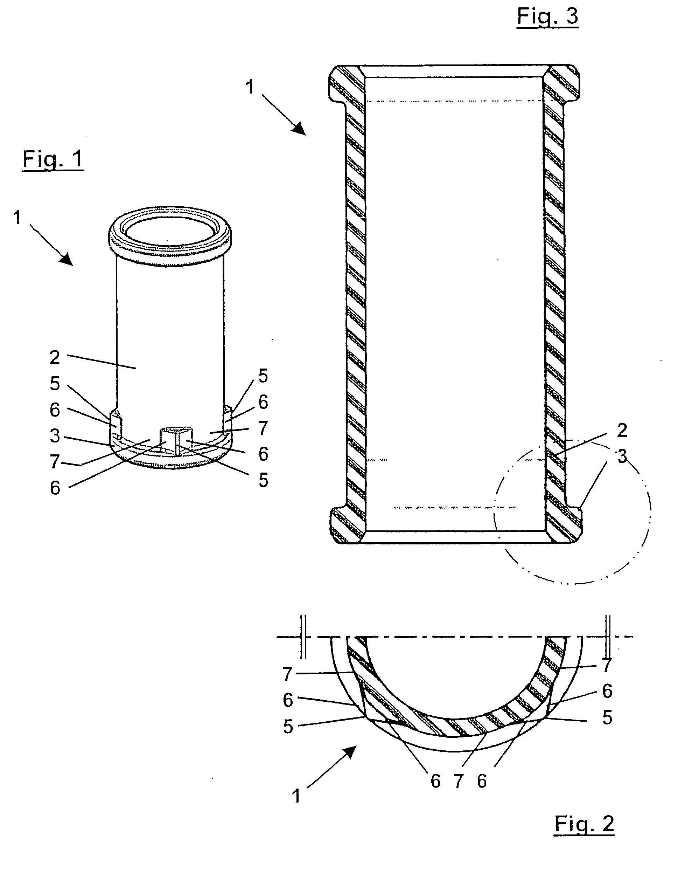

Wie aus den Figuren 1 bis 3 hervorgeht weist der als Ausführungsbeispiel betrachtete rohrförmige Fittingkörper 1 ein freies Ende 2 auf, das mit einem radial nach außen gerichteten Ringflansch 3 versehen ist. An der von der Stirnseite 4 des freien Endes 2 wegweisenden Seite des Ringflansches 3 sind vier gleichmäßig über den Umfang verteilte Vorsprünge 5 ausgebildet, deren Höhe der Höhe des Ringflansches 3 entspricht. Die Vorsprünge 5 weisen an beiden Seiten in Umfangsrichtung geneigte Auflaufflächen 6 auf, deren Funktion unten näher beschrieben wird.

Zwischen den Vorsprüngen 5 mit den seitlichen Auflaufflächen 6 befinden sich gegenüber dem Ringflansch 3 vertiefte Bereiche, die als Rastvertiefungen 7 zum Einrasten von Rastvorsprüngen von einer mit dem Fittingkörper 1 zu verbindenden Rohrleitungskupplung dienen, die ebenfalls unten näher beschrieben wird.

Durch Relativdrehung zwischen der Rohrleitungskupplung und dem Fittingkörper 1 um die Achse dessen freien Endes 2 werden die Rastvorsprünge der Rohrleitungskupplung über die Auflaufflächen 6 der Vorsprünge 5 aus den Rastvertiefungen 7 gehoben und durch axiale Verschiebung vom freien Ende 2 des Fittingkörpers 1 weg über den Ringflansch 3 geschoben, so dass die Rastverbindung zwischen der Rohrleitungskupplung und dem Fittingkörper 1 gelöst werden kann.

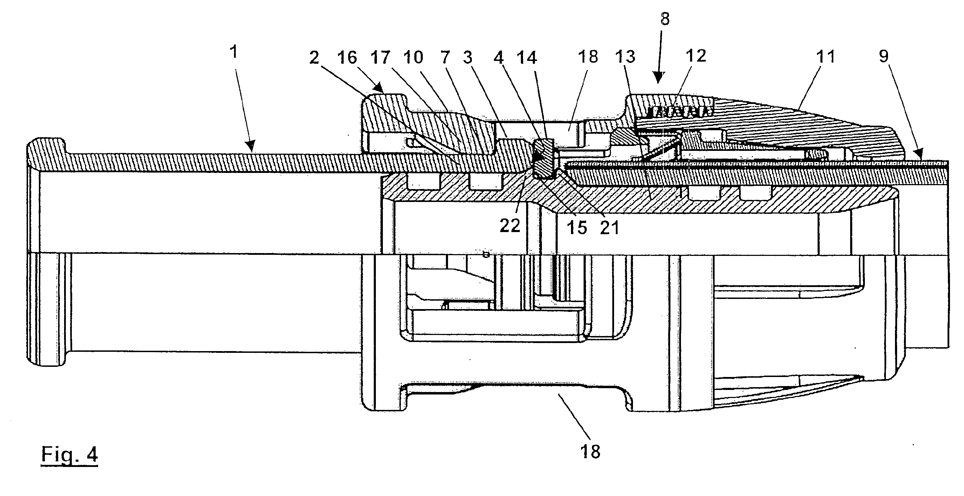

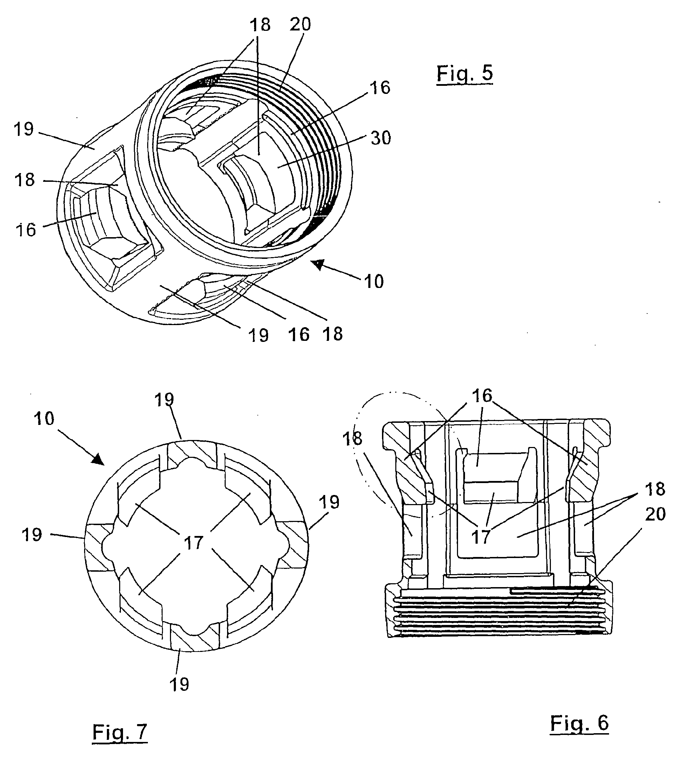

Wie die Rohrleitungskupplung, insbesondere das Kupplungsteil für den Fittingkörper 1, zur rastenden Verbindung mit dem Fittingkörper 1 ausgelegt sein kann, geht aus der Gesamtdarstellung gemäß Figur 4 und der genaueren Darstellung des Kupplungsteils in den Figuren 5 bis 7 hervor.

Figur 4 zeigt ein System bestehend aus dem zuvor beschriebenen Fittingkörper 1 und einer mit diesem Zusammenwirkenden Rohrleitungskupplung 8, wobei in die Rohrleitungskupplung 8 das Ende einer Rohrleitung 9 eingesteckt ist.

Die Rohrleitungskupplung 8 weist an der zum Fittingkörper 1 weisenden Seite ein Kupplungsteil 10 zur rastenden Verbindung mit dem Fittingkörper 1 und an der zur Rohrleitung 9 weisenden Seite ein Fixierteil 11 zur Festlegung des freien Endes der Rohrleitung 9 auf. Das Kupplungsteil 10 ist mit dem Fixierteil 11 über ein Gewinde 12 verschraubt. Beide Teile sind auf einem Stützkörper 13 zur Abstützung des Fittingkörpers 1 auf der einen und der Rohrleitung 9 auf der anderen Seite durch ein Formschlusselement 14 befestigt, das in eine Nut 15 des Stützkörpers 13 radial eingreift.

Die Stirnseite 4 des Fittingkörpers 1 liegt am Formschlusselement 14 in der vollständig in das Kupplungsteil 10 eingerasteten Position an.

Die Rastverbindung wird durch Rastarme 16 am Kupplungsteil 10 bewirkt, die an ihren Enden Rastvorsprünge 17 aufweisen, die in die durch den Hinterschnitt des Ringflansches 3 des Fittingkörpers 11 gebildete Rastvertiefung 7 eingreifen.

Die Gestaltung des Kupplungsteils 10 der Rohrleitungskupplung 8 geht genauer aus den Figuren 5 bis 7 hervor. Wie man diesen Figuren entnimmt, weist das in Form eines Zylinders ausgebildete Kupplungsteil 10 vier über den Umfang verteilte fensterartige Öffnungen 18 auf, die durch axial verlaufende Stege 19 voneinander getrennt sind. In den Öffnungen 18 sind an dem an dem Innengewinde 20 zugewandten Seiten die sich axial erstreckenden Rastarme 16 angeformt. Die an den Enden der Rastarme 16 ausgebildeten Rastvorsprünge 17 erstrecken sich von der Innenseite des zylinderförmigen Kupplungsteils 10 radial einwärts.

Die Befestigung des in das Fixierteil 11 eingesteckten freien Endes der Rohrleitung 9 kann mit üblichen Mitteln vorgenommen werden und braucht an dieser Stelle nicht näher beschrieben zu werden. In seiner vollständig eingesteckten Position liegt die Stirnseite des freien Endes der Rohrleitung 9 an einer Anschlagfläche eines Vorsprungs 21 des Stützkörpers 13 an (Fig. 4). Zwischen diesem Vorsprung 21 und einem benachbarten Vorsprung 22 ist die Nut 15 ausgebildet, in die das Formschlusselement zur Befestigung des Kupplungsteils 10 und des Fixierteils 11 am Stützkörper 13 eingreift.

Diese Anordnung der Stirnseite des freien Endes der Rohrleitung 9 auf der einen Seite des Formschlusselements 14 und die oben beschriebene Anordnung der Stirnseite 4 des freien Endes 2 des Fittingkörpers 1 im Bereich des Kupplungsteils 10 hat die folgende Bedeutung. Die fensterartigen Öffnungen 18 des zylinderförmigen Kupplungsteils 10 erstrecken sich, wie aus Figur 4 hervorgeht, axial über einen Bereich, so dass sowohl der Ringflansch 3 des Fittingkörpers 1 zwischen den Rastarmen 16 und dem Formschlusselement 14 als auch an der anderen Seite des Formschlusselements 14 die Stirnseite der Rohrleitung 19 nach außen sichtbar sind. Auf diese Weise kann zum einen der korrekte Rastsitz des Fittingkörpers 1 als auch der korrekte Stecksitz der Rohrleitung 9 registriert und kontrolliert werden.

Andererseits kann aufgrund der fensterartigen Öffnungen 18 unter optischer Kontrolle auch das Lösen der Verbindung zwischen dem Kupplungsteil 10 und dem Fittingkörper 1 vorgenommen werden. Die Relativdrehung zwischen der Rohrleitungskupplung 8 und dem Fittingkörper 1 kann genau so weit durchgeführt werden, dass die Rastvorsprünge 17 der Rastarme 16 über die in den Figuren 1 und 2 dargestellten Auflaufflächen 6 der Vorsprünge 5 auf das Niveau des Ringflansches 3 des Fittingkörpers 1 gehoben werden. Danach kann kontrolliert der Fittingkörper 1 mit seinem Ringflansch 3 unter den Rastarmen 16 herausgezogen werden. Auf diese Weise lassen sich die Bewegungen gezielt durchführen und die Rastverbindungen zwischen dem Fittingkörper 1 und der Rohrleitungskupplung 8 auf einfache und schnelle Weise lösen.

### Bezugzeichenliste

- 1: Fittingkörper
- 2: freies Ende
- 3: Ringflansch
- 4: Stirnseite
- 5: Vorsprung
- 6: Auflauffläche
- 7: Rastvertiefungen
- 8: Rohrleitungskupplung
- 9: Rohrleitung
- 10: Kupplungsteil
- 11: Fixierteil
- 12: Gewinde
- 13: Stützkörper
- 14: Formschlusselement
- 15: Nut
- 16: Rastarm
- 17: Rastvorsprung
- 18: Öffnung
- 19: Steg
- 20: Innengewinde
- 21: Vorsprung
- 22: Vorsprung

## Patentansprüche

1. Fittingkörper (1) mit mindestens einem rohrförmigen freien Ende (2) zum Anschluss an Rohrleitungen (9), wobei das freie Ende (2) mindestens eine Rastvertiefung (7) zum Einrasten eines Rastvorsprungs (17) einer mit dem freien Ende (2) des Fittingkörpers (1) zusammen wirkenden Rohrleitungskupplung (8) aufweist, **dadurch ge-kennzeichnet**, dass die Rastvertiefung (7) mindestens an einer ihrer Seiten eine Auflauffläche (6) für den Rastvorsprung (17) aufweist und dass die Auflauffläche (6) so ausgebildet ist, dass bei Relativbewegung des Rastvorsprungs(17) der Rohrleitungskupplung (8) gegen die Auflauffläche (6) der Rastvertiefung (7) des Fittingkörpers (1) ein Bewegungswiderstand zu überwinden ist.

2. Fittingkörper nach Anspruch 1, **dadurch gekenn- zeichnet**, dass die Auflauffläche (6) für den Rastvorsprung (17) an einer in Umfangsrichtung weisenden Seite der Rastvertiefung (7) vorgesehen ist, so dass durch Relativdrehung des Fittingkörpers (1) gegenüber der Rohrleitungskupplung (8) die Rastverbindung zwischen Fittingkörper (1) und Rohrleitungskupplung (8) lösbar ist.

3. Fittingkörper nach Anspruch 1, **dadurch gekenn- zeichnet**, dass die Auflauffläche für den Rastvorsprung an einer axial von der Stirnseite des freien Endes des Fittingkörpers weg weisenden Seite der Rastvertiefung angeordnet ist.

4. Fittingkörper nach einem der Ansprüche 1 bis 3, **da- durch gekennzeichnet**, dass die Rastvertiefung (7) an der Außenseite seines freien Endes (2) angeordnet ist, er an seinem freien Ende (2) einen radial nach außen weisenden Ringflansch (3) aufweist, wobei die Rastvertiefung (7) durch den vom Ringflansch (3) an seiner axial von der Stirnseite (4) des freien Endes (2) weg weisenden Seite gebildeten Hinterschnitt gegeben ist, und an der axial von der Stirnseite (4) des freien Endes (2) weg weisenden Seite des Ringflansches (3) mehrere Vorsprünge (5) ausgebildet sind, deren Höhe etwa der Höhe des Ringflansches (3) entspricht und zwischen denen eine entsprechende Zahl von Rastvertiefungen (7) angeordnet sind, die der Zahl der Rastvorsprünge (17) der mit dem Fittingkörper (1) zu verbindenden Rohrleitungskupplung (8) entspricht.

5. Fittingkörper nach Anspruch 4, **dadurch gekenn- zeichnet**, dass die Vorsprünge (5) in Umfangsrichtung seines rohrförmigen freien Endes (2) an beiden Seiten geneigte Auflaufflächen (6) für die Rastvorsprünge (17) der Rohrleitungskupplung (8) aufweisen.

6. System bestehend aus einem Fittingkörper (1) nach einem der Ansprüche 1 bis 5 und einer Rohrleitungskupplung (8), **da- durch gekennzeichnet**, dass die Rohrleitungskupplung (8) ein Kupplungsteil (10) zur rastenden Aufnahme des freien Endes (2) des Fittingkörpers (1) aufweist, wobei am Kupplungsteil (10) mindestens ein Rastvorsprung (17) vorgesehen ist, der rastend in die Rastvertiefung (7) des freien Endes (2) des Fittingkörpers (1) eingreifbar ist, und wobei durch Relativbewegung zwischen der Rohrleitungskupplung (8) und dem Fittingkörper (1) des Rastvorsprungs (17) über die Auflauffläche (6) des Vorsprungs (5) seitlich der Rastvertiefung (7) aus dieser entfernbar ist, so dass die Rohrleitungskupplung (8) vom Fittingkörper (1) lösbar ist.

7. System nach Anspruch 6, **dadurch gekenn- zeichnet**, dass das Kupplungsteil 10 der Rohrleitungskupplung (8) im wesentlichen zylinderförmig ausgebildet ist mit einer Stirnseite zum Einführen des freien Endes (2) des Fittingkörpers (1) und mindestens einem sich von der Stirnseite weg axial erstreckenden flexiblen Rastarm (16) mit einem radial nach innen gegenüber der Innenseite des Kupplungsteils (10) vorstehenden Rastvorsprung (17) zum rastenden Eingriff in eine an der Außenseite des freien Endes (2) des Fittingkörpers (1) angeordnete Rastvertiefung (7).

8. System aus Fittingkörper und Rohrleitungskupplung, wobei der Fittingkörper mindestens ein rohrförmiges freies Ende mit mindestens einer Rastvertiefung zum Einrasten eines Rastvorsprungs der Rohrleitungskupplung aufweist und Rastvertiefung mindestens an einer ihrer Seiten in Umfangsrichtung des rohrförmigen freien Endes einen radialen Vorsprung aufweist, **dadurch gekennzeich- net**, dass der Rastvorsprung an mindestens einer seiner in Umfangsrichtung weisenden Seite eine gegenüber der Umfangsrichtung radial nach innen geneigte Auflauffläche aufweist, die bei Relativdrehung der Rohrleitungskupplung gegenüber dem Fittingkörper mit dem radialen Vorsprung des Fittingkörpers zusammenwirkt.

9. System nach einem der Ansprüche 6 bis 8, **dadurch gekennzeichnet, dass** das Kupplungsteil (10) der Rohrleitungskupplung (8) mindestens eine fensterartige Öffnung (18) in der Zylinderwand aufweist und der Rastarm (16) sich von der der Stirnseite abgewandten Seitenfläche der Öffnung (18) aus in dieser erstreckt.

10. System nach Anspruch 9, **dadurch gekenn- zeichnet**, dass die fensterartige Öffnung (18) in der Zylinderwand des Kupplungsteils (10) so ausgebildet ist, dass bei einer Relativdrehung des in das Kupplungsteil (10) eingerasteten Fittingkörpers (1) gegenüber der Rohrleitungskupplung (8) die Position der Vorsprünge (5) am freien Ende (2) des Fittingkörpers (1) zu den Rastvorsprüngen (17) an den Rastarmen (16) des Kupplungsteils (10) zumindest teilweise registrierbar und kontrollierbar ist.
